# NEW EUROPEAN PATENT SPECIFICATION

(11) **EP 2 111 509 B2**
(45) Date of publication and mention of the opposition decision: **09.11.2022**
(45) Mention of the grant of the patent: 24.10.2018
(21) Application number: 08700885.0
(22) Date of filing: 15.01.2008
(51) Int. Cl.: F04D 7/04, G05B 23/02

(54) **A SYSTEM AND METHOD FOR MONITORING AND CONTROL OF WIND FARMS**
SYSTEM UND VERFAHREN ZUM ÜBERWACHEN UND STEUERN VON WINDFARMEN
SYSTÈME ET PROCÉDÉ POUR SURVEILLER ET COMMANDER DES PARCS ÉOLIENS

(30) Priority: 15.01.2007 DK 200700056
(43) Date of publication of application: 28.10.2009
(73) Proprietor: Vestas Wind Systems A/S, 8200 Aarhus N (DK)
(72) Inventor: RASMUSSEN, Keld, DK-7400 Herning (DK); LOVMAND, Bo, DK-8370 Hadsten (DK); FUGLSANG, Bjørn Priisholm, 8362 Hørning (DK); NIELSEN, Per Hagen, 8381 Tilst (DK); HELBO, Ole, DK-8200 Aarhus N (DK)
(74) Representative: Grünecker Patent- und Rechtsanwälte PartG mbB
(86) International application number: PCT/DK2008/000013
(87) International publication number: WO 2008/086801

(56) References cited:
- EP-A- 1 519 040
- WO-A1-01/77525
- DE-A1- 10 020 965
- GB-A- 2 405 492
- US-A1- 2004 230 377
- US-A1- 2005 107 989

## Description

### FIELD OF THE INVENTION

The invention relates to a method for monitoring and control of wind turbine generators. More particularly, the invention relates to monitoring and control of wind farms having several wind turbine generators.

### BACKGROUND OF THE INVENTION

The strategically distributed nature of wind power presents unique challenges. A wind farm comprises several wind turbines located on- or offshore, and often covers large geographic areas.

These factors usually require a variety of networked interconnections and telecommunication technologies for monitoring and controlling wind power electric generating facilities referred to as SCADA (SCADA: Supervisory Control And Data Acquisition).

Today, it is possible to monitor and control wind farms from a remote distance by means of e.g. a remote client computer logging on to the wind farm network.

Prior art presents several ways of monitoring and controlling wind turbines and wind farms. International patent application WO 2003/029648 teaches a method and computer system for handling operational data of wind power plants. International patent application WO 2005/042971 presents an example of a control network of a wind farm network. European patent application EP 1519040 discloses a method for a remote reading and changing of power settings in wind turbine generators.

In addition, the prior art document GB 2405492 A disclose a system for remote monitoring and control of power generating plant. Further, US 2004/0230377 disclose a wind power management system for monitoring and controlling a group of wind turbine generator parks, having a SCADA server connected to a wind park.

### SUMMARY OF THE INVENTION

The invention relates to a method of monitoring and controlling a wind farm according to claim 1. The invention is described with reference to a wind farm monitoring and control system, said system comprising
- at least one wind farm (WF),
- at least one intelligent management server (IMS) connectable to said at least one wind farm (WF) via a data communication network (DCN),
- at least one wind farm configuration tool (WCT) related to said intelligent management server (IMS) for establishment of connection(s) to said at least one wind farm (WF).

It should be noted that the wind farm configuration tool may be located almost anywhere as long as the established configuration may be transferred to the intelligent management server.

A data communication network is in accordance with the present invention understood as any suitable network communicating data, e.g. a local area network, a Ethernet, etc. communicating via cabling, optical fiber or a wireless connection. A public data communication network PDCN or data communication network (DCN) is understood as a network which may be wired, e.g. lease line, dialup line, fiber, ADSL, cable and/or wireless, e.g. licensed radio, spread spectrum, cellular, WLAN or satellite.

In an embodiment of the invention, said system comprises at least two intelligent management servers.

The different intelligent management servers may thus e.g. communicate to one specified wind farm on the basis of different namespaces thereby basically establishing a system where the intelligent management servers have different access options to the same wind farm. The different access may be established by the wind farm configuration tool, whereas the different access at least partly may be defined by the established and dedicated namespaces.

An intelligent management server may typically simply designate a data processing server located remotely to the wind farm.

The intelligent management server may often be positioned at the site of an operator.

The intelligent management server may advantageously be individually configured by means of said wind farm configuration tool.

In a preferred embodiment of the invention, the intelligent management server may be configured to communicate to a specified wind farm, by means of connections and according a namespace individually related to the specified farm.

If the intelligent management server communicates with several wind farms, the server may communicate according to different name spaces defined by or according to the individual wind farm.

In an embodiment of the invention, said system comprises at least two wind farms.

In an example, said system furthermore comprising a namespace defining a set of logical elements.

A wind farm is, according to an embodiment of the invention, understood as an arrangement which may at least partly comprise the following: one or several wind turbine generators, one or several substations, one or several meteorological equipment, and one or several SCADA servers which may be related to a control station.

The present invention presents a system for monitoring and control of wind farms. The monitoring and control is performed so that it is possible to monitor and control several wind farms homogeneously. Hereby it is possible to monitor different wind farms simultaneously with a uniform output and it is moreover possible to compare data from the wind farms.

A namespace is according to an embodiment of the invention understood as a definition of the logical elements of the wind farm WF, of which data may be exchanged. An element will normally correspond to a logical element or a physical device such as a wind turbine or meteorological station. Each logical element may be associated with a tree structure of sub-elements.

In an embodiment of the invention, said data communication network is a public data communication network.

A public data communication network may e.g. comprise a wired or a wireless communication system.

Evidently, the system may alternatively apply a data communication network dedicated to the connection.

In an embodiment of the invention, said wind farm furthermore comprises means for processing data according to said namespace.

It is according to an embodiment of the invention possible for a processor related to a wind farm, e.g. the SCADA server to process wind farm data e.g. by means of scaling data according to the relevant namespace . The processing may also involve a recalculation of a data, e.g. from Celsius degrees to Fahrenheit degrees or from kilowatt to megawatt. A processing may also involve a pre calculation of data, for example replacement of particular data. This is a very advantageous feature in that the data may become homogenous. Hereby it is ensured that the intelligent management server may present data from several wind farms in a homogeneous way and even compare data from different wind farms.

The scaling may be performed by means of transmitting scaling factors and scaling properties together with the namespace to the current intelligent management server. Alternatively, the scaling may be by pre-scaling the data in relation to the wind farm and transmitting the scaled data to the intelligent management server subsequently.

Thus, scaling may e.g. imply that data communicated via the connection between the wind farm(s) and the intelligent management server is converted prior to transmitting data e.g. at the wind farm.

Alternatively, data may be transmitted together with metadata which may be applied at the recipient site for the purpose of converting - if necessary - the received data into the desired format.

In the invention, said namespace is restricted according to a user specific authentication and/or authorization properties.

According to an advantageous and preferred embodiment of the invention, a namespace may be modeled to fit to a specific user on the basis of an available aggregate namespace at the wind farm or in relation to the wind farm.

In other words, one user may communicate with the wind farm according to a specified - and dedicated - namespace, whereas another user may communicate on the basis of a namespace which has been restricted otherwise, if so desired.

In accordance with a further embodiment of the invention, the intelligent management server IMS may provide means for controlling or varying the graphical user interface according to the authorization permissions of a user. This may e.g. be by means of hiding specific info or controls in the graphical user interface GUI if a user is not authorized to se or change these. This is a very advantageous feature according to an embodiment of the invention in that it may be of interest to the wind park owner that the different users may have different access possibilities.

In an embodiment of the invention, said intelligent management server is located at a remote distance with reference to said at least one wind farm.

In an embodiment of the invention, said namespace is defined according to a connected intelligent management server.

According to an embodiment of the invention, a namespace may be defined according to, i.e. dedicated to, the communication between a wind farm and a specified intelligent management server.

In an embodiment of the invention, said namespace is defined according to a specific user and/or client.

According to an embodiment of the invention, a namespace may be defined according to, .i.e. dedicated to, the communication between a wind farm and specified user, e.g. specified companies or even specified persons.

In an embodiment of the invention, said system furthermore comprises a client connectable to said intelligent management server via a data communication network for surveillance and control of said wind farms via said intelligent management server.

It is within the scope of the invention that a client may access the features of the system. A client is according to an embodiment of the invention understood as a device which may comprise a processor and data storage means, e.g. a personal computer (PC), a mobile phone, a personal digital assistant (PDA), etc. The client may also be software component. The client may be controlled by a user, e.g. a wind farm operator, the wind farm vendor, the utilities company etc.

In the specific context, a client may e.g. be understood as a software module which may be run executed on any suitable hardware platform.

In an embodiment of the invention, said intelligent management server is associated to a graphical user interface.

The graphical user interface may facilitate access visual representations of data received from different wind farms and the data may be presented in order to establish a correlation visually. A visual correlation may e.g. imply that data relating to power of different wind parks may be correlated.

Moreover, a graphical user interface may facilitate that a user may transmit control signals to different wind parks even if the wind parks basically refer to different types of SCADA systems.

Moreover, the graphical user interface may advantageously present the available control commands available to the user with respect to the individual connected wind farms in a comparable manner.

In an embodiment of the invention, said client may edit and control said namespace by means of said wind farm namespace tool.

One embodiment of the invention furthermore presents a wind farm namespace tool for configuring the namespace of wind farms. The namespace tool may be related to an intelligent management server. The wind farm namespace tool makes it possible for a system administrator to define an exact namespace for a specific wind farm. The wind farm namespace may be stored so it is reachable for the wind farm. Hereby it is possible when an intelligent management server via a wind park configuration tool connects to a wind farm; the namespace for that wind farm may automatically be transmitted to the intelligent management server. This is very advantageous in that all intelligent management servers which connect to a wind park may automatically retrieve the namespace from the wind farm. This entails that a change in the namespace will be distributed to all intelligent management servers automatically. This is a very advantageous feature of an embodiment of the invention in that system administrator may save much time on updating remote clients. According to an embodiment of the present invention, an administrator will just need to update the namespace in the relevant wind farm.

In an embodiment of the invention, said wind farm configuration tool comprises means for definition of wind farm connections to at least one wind farm.

In an embodiment of the invention, said wind farm configuration tool is external with reference to the intelligent management server.

The wind farm configuration tool may basically be an external tool by means of which the required configuration of connections is established and then transferred to the intelligent management server. Typically, the intelligent management server establishes and maintains the communication to and from the wind farm.

Typically, the intelligent management server establishes and maintains the communication and connections to and from the wind farm according to the farm(s) according to a configuration established by the wind farm configuration tool.

In an embodiment of the invention, said namespace (N) is stored in relation to said wind farm.

According to a embodiment of the invention, the namespace related to a specified wind farm should be stored at the wind farm or at least be available at the wind farm.

In an embodiment of the invention, said namespace is stored at the wind farm in relation to the SCADA server.

In the invention, said namespace represents the logical elements of a corresponding wind farm.

In an embodiment of the invention, said namespace is at least partly distributed at least partly between said wind park to said intelligent management server.

In an embodiment of the invention, said intelligent management server comprises means for retrieval of a namespace from a wind farm in connection with connecting to a wind farm.

In an embodiment of the invention, said wind farm comprises means for maintaining an event-log which involves storage of type and time of all events at least partly.

According to a preferred embodiment of the invention, an event-log should be kept at the wind farm in order to provide an eased troubleshooting and/or fault detection. This is in particular important due to the fact that the invention basically facilitates that e.g. a SCADA system of a wind farm may be controlled or influenced by several different users, e.g. a local SCADA operator and an operator or the intelligent management server (IMS).

When several users may access the same wind farm, it is advantageous to monitor or maintain a log of all events performed both locally and remotely e.g. via the intelligent management server. The logged data may e.g. be stored in the storage means related to the wind farm. It is possible for a system administrator to retrieve a log file from the wind farm. This log file may be of great value if for example two users disagree about who is responsible for a specific event, such as reducing the maximum produced power of a wind park.

In an embodiment of the invention, said intelligent management server comprises security facilities.

In an embodiment of the invention, said security facilities defines that an intelligent management server requires a password and/or a dongle from a user to provide access to data from the wind farm, and hereby defines the authentication properties.

It is within the scope of the invention that a user must be authenticated and/or authorized when accessing the intelligent management server. This may be a user typing a username and a corresponding password and if necessary connects a dongle. A dongle is understood as an electronic device that must be attached to a computer e.g. the client in order to gain access to a wind park.

In an embodiment of the invention, said connection(s) are communicating on the basis of a namespace established by a wind farm namespace tool.

The namespaces are typically established on the basis of aggregate (typically predefined) namespace by restrictions and the established restricted namespaces may be individually restricted and dedicated to specified connections. A restricted namespace may also within the scope of the invention be referred to as a fragmented namespace.

Evidently, a dedication may involve that fragmented namespace may be dedicated to one specific, several or all of said connections.

Furthermore, it should be noted that a fragmented name in principle may be chosen to comprise the complete aggregate namespace if so desired.

In an embodiment of the invention, said namespace tool is associated to or incorporated in said wind farm configuration tool.

The invention relates to a method of monitoring and controlling a wind farm according to claim 1.

It should be noted that measure and monitoring data may both be obtained prior to or subsequent to the obtaining of a namespace by means of which the obtained measure and monitoring data may be interpreted.

In an embodiment of the invention, said method moreover comprises the step of controlling at least one logical element of said wind farm.

In an embodiment of the invention, said wind farm connections define specified wind farm(s) and specified intelligent management server(s) between which connections are made or are to be made.

The establishment of a connection may be regarded as a configuration for defining the communicating parties.

In an embodiment of the invention, said method further comprises the step of dedicating a namespace to said connection by means of a wind farm namespace tool.

Evidently, the namespace tool may be more or less integrated in other tools such as the configuration tool.

The dedication of a namespace to a certain connection avails e.g. that communication from the intelligent management server to different wind farms may be made by means of different namespaces, e.g. different fragmented versions of an aggregated namespace covering all connected wind farms or alternatively, availing a certain wind farm to communicate with different intelligent management servers according to different namespaces according to the definitions established by the namespace tool.

In an embodiment of the invention, said method comprises the step of establishing wind farm connections from an intelligent management server to at least two wind farms by means of a wind farm configuration tool.

Furthermore, the invention relates to a method of establishing a communication between an intelligent management server and at least one wind farm, said method comprising the steps of
- obtaining namespace defining information from a wind farm,
- communicating with said wind farm on the basis of said namespace defining information.

In an embodiment of the invention, said namespace defining information relates to a namespace defined by a wind farm namespace tool.

### THE DRAWINGS

The invention will be described in the following with reference to the figures in which
figure 1 illustrates a large modern wind turbine as seen from the front,
figure 2 illustrates an overview of a typical wind farm according to an example of the prior art.
figure 3 illustrates an overview of a typical wind farm according to an embodiment of the invention,
figure 4 illustrates an overview of two wind farms according to an example of the prior art,
figure 5 illustrates an overview of two wind farms according to an embodiment of the invention,
figure 6 illustrates a detailed view of the intelligent management system and elements that may interact with this,
figure 7 illustrates some principles of a wind farm configuration tool,
figure 8 illustrates the principles of the namespace definitions transfer between the SCADA servers and the intelligent management server,
figure 9 illustrates the principles of how a namespace may be applied as one aggregate namespace or as a fragmented namespace,
figures 10A and 10B illustrate a further feature of the application of fragmented namespaces according to some embodiments of the invention, and
figure 11 illustrates the advantageous principle of how an intelligent management server may merge two or more different namespaces into one single merged namespace.

### DETAILED DESCRIPTION

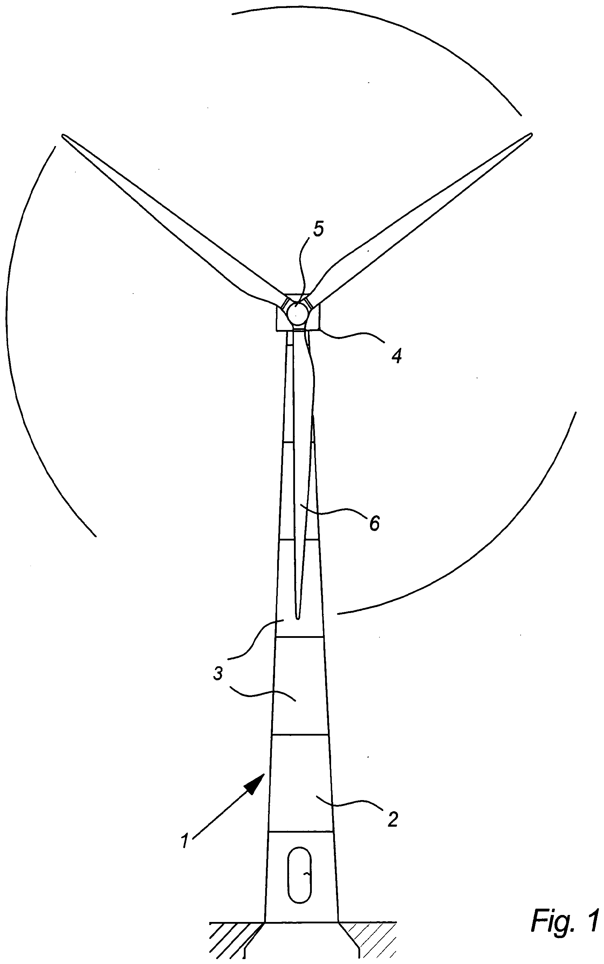

Figure 1 illustrates a modern wind turbine 1, comprising a tower 2 and a wind turbine nacelle 4 positioned on top of the tower 2. The tower 2 is built up of a plurality of tower segments 3. The wind turbine rotor 5, comprising three wind turbine blades 6, is connected to the nacelle 4 through the low speed shaft which extends out of the nacelle 4 front.

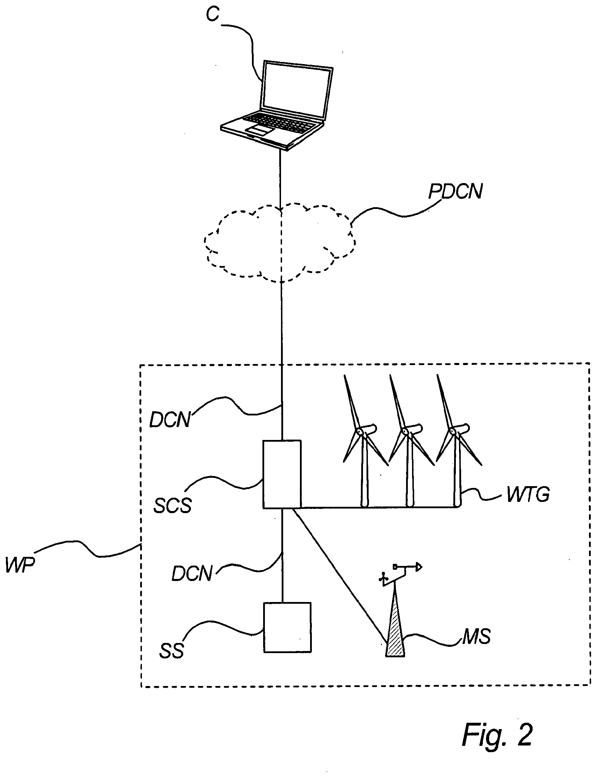

Figure 2 illustrates an overview of a typical wind farm WF according an example of the prior art. A wind farm comprises a number of wind turbine generators WTG which may be located in the same area in a group onshore or offshore. The wind turbines may be assembled to constitute a total unified power producing unit that may be connected to the utility grid. A wind farm typically has a Supervisory Control And Data Acquisition (SCADA) server SCS that may be related to a master or control station. A wind farm may furthermore comprise a substation SS which may comprise switchgears, breakers, Uninterruptible Power Supply (UPS) systems and other equipment to control the generated power and power output of the wind farm WF to the power grid. Moreover, a wind farm may comprise a meteorological station MS which may comprise equipment for e.g. measuring wind speed, air humidity and the wind direction.

The SCADA server SCS may comprise a number of computers which continuously monitor the condition of the wind turbine and collect statistics on its operation. The SCADA server SCS may also control a large number of switchgears, hydraulic pumps valves, and motors within the wind turbine, typically via communication with a wind turbine controller of the wind turbine. The SCADA server SCS may also control elements in a sub-station SS. The control stations may be connected to the wind farm locally or remotely via a data communication network DCN or a public data communication network PDCN, e.g. the internet. The data communication network DCN may e.g. comprise a local area network LAN and/or a public data connection network, e.g. the internet. Evidently, the meteorological station MS and the sub-station may comprise their own computer and data storage facilities, e.g. servers and databases, communicating with the SCADA server SCS.

For monitoring and control purposes it is possible to log on to the wind farm WF locally via a data communication network DCN or remotely via a public data communication network PDCN, e.g. the internet. This may be done from a computer functioning as a client C logging on to the SCADA server SCS of the wind farm. From a client C logged on to the wind farm system it is possible to monitor the wind farm which may e.g. be a reading of a pressure meter of a valve of one of the wind turbine generators WTG. It is moreover possible for the client C to control the elements of the wind farm WF.

The client may however be running a special dedicated software component for a specific wind turbine.

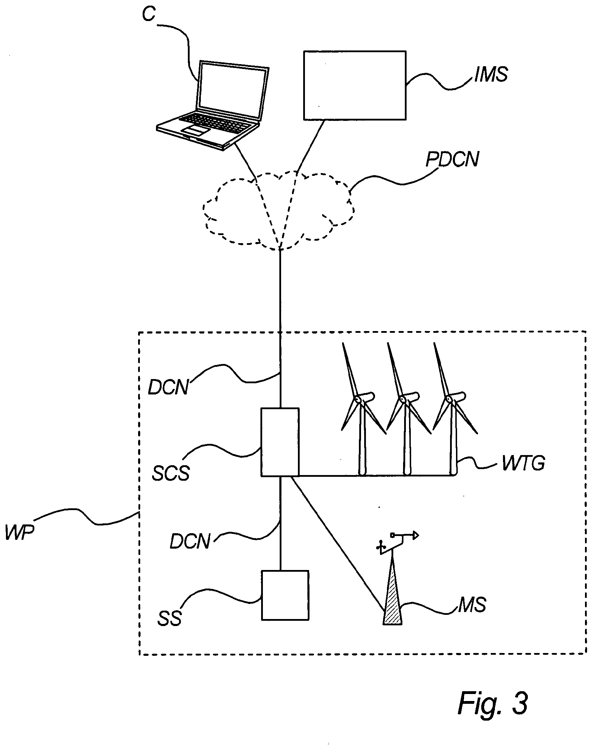

Figure 3 illustrates an overview of a wind farm WF according to an embodiment of the invention. The figure illustrates the same elements as described with reference to figure 2, and additionally the figure illustrates an intelligent management server IMS. The intelligent management server may, as illustrated, be connected to a wind farm in the same manner as a conventionally connected client C as described with reference to figure 2.

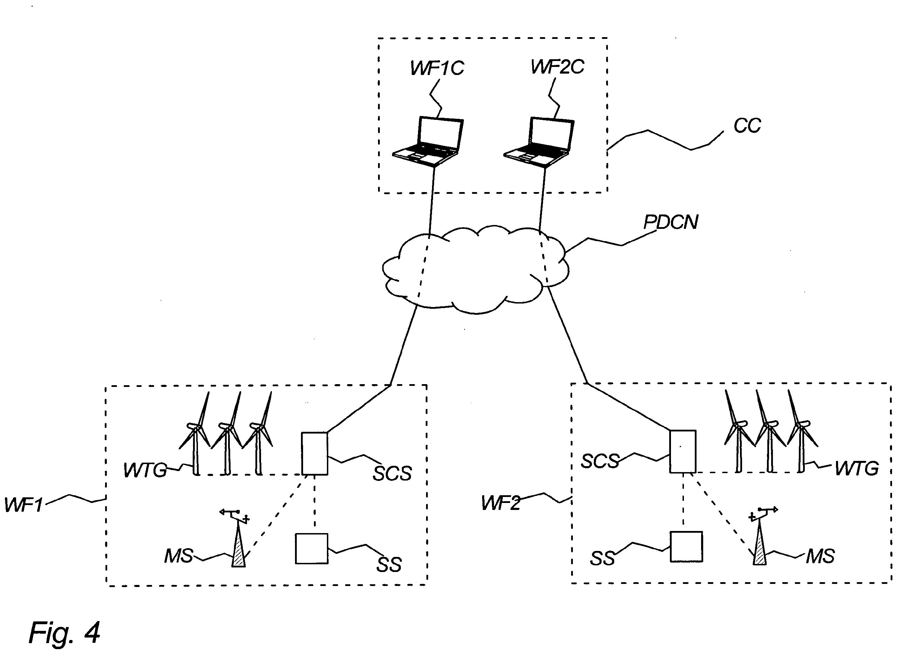

Figure 4 illustrates an overview of two wind farms WF1, WF2 according to an example of the prior art. The figure furthermore illustrates a control centre CC from which a wind farm 1 client WF1C may be connected to wind farm 1 and where a wind farm 2 client WF2C may be connected wind farm 2 WF2. The clients WF1C, WF2C may, for monitoring and control purposes, log on to the wind farms locally or remotely via a data communication network or via a public data communication network PDCN, e.g. the internet. From a client WF1C, WF2C logged on to the wind farm system it is possible to monitor the wind farm which may e.g. be a reading of a pressure meter of a valve of one of the wind turbine generators WTG. It is moreover possible from the client WF1C, WF2C to control the elements of the wind farm WF1, WF2. This may e.g. be instructions to a given wind turbine WTG in one of the wind farms WF1, WF2 to change the reactive power factor of a wind turbine WTG or the wind farm or instructions to start or stop a wind turbine or a wind farm.

The clients WF1C, WF2C may necessarily in this prior art example be a dedicated special software component for each specific wind park.

This entails that it may be difficult to compare data directly because the data are defined in different data types and namespaces.

Another problem in the prior art is that the namespaces N of the wind farms are centrally managed from the clients. If, for example, the control center CC logs on to the wind farm 1 WF1 via the wind farm 1 client WF1C it is the client interface that determines the namespace, i.e. which data that may be exchanged from the wind farm WF1. If another dedicated client connects to wind farm 1 WF1, the namespace may again be client-specific and the namespace of the two clients connected to the same wind farm may not be identical.

According to this example of prior art, it is not possible to restrict the access to fragments of namespaces N of a wind farm. Therefore, the only restrictions possible is either to gain access to the complete namespace or alternatively to gain access to no data.

The namespace defines the logical elements of the wind farm WF, of which data may be exchanged. An element will normally correspond to a physical device such as a wind turbine or meteorological station. Each element may be associated with a tree structure of sub-elements. Examples of elements to be a part of the namespace according to an embodiment of the present invention may be:
"Active alarm code". Indicates if the wind turbines are in alarm mode, and what alarm code.
"Active power measurement". Active power is the total power generated by the wind farm WF or one single wind turbine generator WTG.
"Power Set Point" refers to a standard well-known measure which may e.g. involve regulation of the power factor, i.e. the relation between active and reactive power. This regulation may e.g. relate to regulation of the power performed by means of a central control unit serving two or more wind turbines. Such central control may be continuous or initiated from time to time automatically and/or manually.
"Turbine run state" comprises information of the current run state of a wind turbine e.g. if the wind turbine is stopped.
"Wind speed" comprises information of the current wind speed measured at the wind farm.

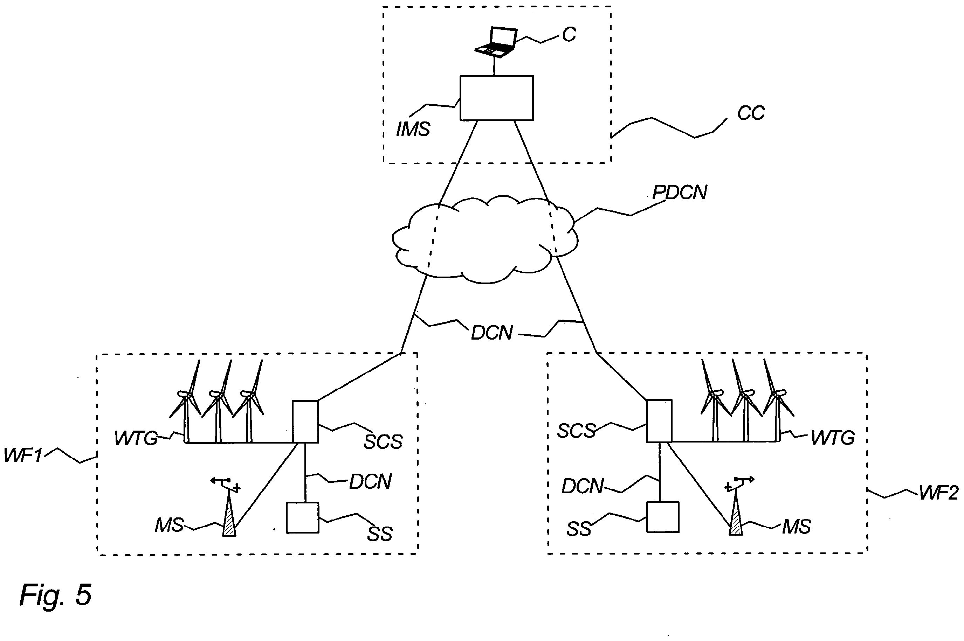

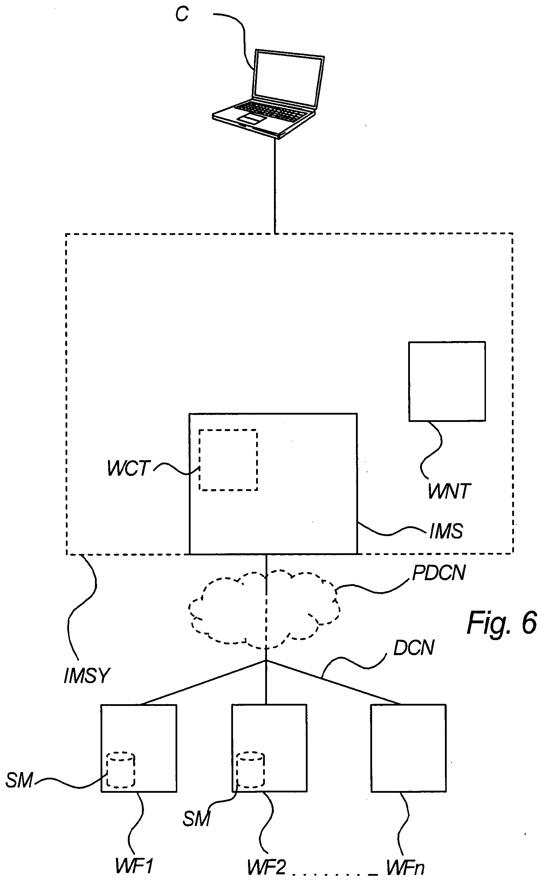

Figure 5 illustrates an overview of two wind farms WF1, WF2 according to an embodiment of the invention. This figure illustrates a system overview of how the control center CC utilizes an intelligent management server IMS to connect to several wind farms WF1, WF2. A client C may hereby contact several wind farms WF1, WF2 and present homogenous information of one or several wind parks to a user via the intelligent management server IMS. In conventional system it is however not possible to represent the wind farms in a homogenous manner at a client C. It is moreover possible to control the wind farms in a homogeneous manner by means of an advantageous obtaining of namespace information which will be described with reference to fig. 6-11. A user may furthermore control the wind parks WF1 WF2 via the client C. The intelligent management server IMS is thus a very advantageous server that may connect to several wind farms which is more specifically described with reference to figure 6.

Figure 6 illustrates a detailed view of the intelligent management system IMSY and elements that may interact with this. The intelligent management system IMSY comprises according to an embodiment of the invention a wind farm configuration tool WCT, a wind farm namespace tool WNT and an intelligent management server IMS. The figure moreover illustrates a client C, a public data communication network PDCN, a number of wind farms WF1, WF2, ..., WFn and storage means SM.

By means of the wind farm configuration tool WCT it is possible for a user to configure which wind farms WF1, WF2, ..., Fw3 to connect to from the intelligent management server IMS. This may be done by entering wind farm characterizing information in a wind farm configuration tool WCT which may run as an application in the intelligent management system IMSY. The information may e.g. be:
- Address for a wind farm WF, for example internet protocol (IP) address.
- Username and password for the wind farm SCADA server SCS.
- Username and password for a file transfer protocol (FTP) connection.

The wind farm namespace tool WNT is a tool which makes it possible to determine which elements of the wind farms WF it should be possible to monitor and control from the intelligent management system IMSY, and comprises thus means for configuring the namespace for a wind farm WF.

In a system of one or several wind farms WF many types of data that users access, manage, store, and possibly share exist. A namespace can be provisioned as a data structure to collectively reference and organize the various types of data.

A namespace may, according to an embodiment of the invention, be related to a particular wind farm WF, entailing that all users of one wind park may access the same data structure, utilizing the same namespace. This is very advantageous in that a namespace is defined for a wind farm, when the namespace N may be saved to storage means SM related to the specific wind park. This entails that another user connects to the same wind farm WF, e.g. via an intelligent management server IMS, when the namespace may be retrieved from the wind farm WF. This decentralized storage of namespace is according to an embodiment of the invention ensuring that only one namespace may exist for a wind farm WF, even if several users may connect to the wind farm WF.

In another embodiment of the invention, an individual or private namespace associated with an individual user may exist or a namespace associated with designated members of the namespace. For example, a wind farm WF can be implemented or set up so that only designated members may access critical data associated with the wind farm WF. Thus, it is within the scope of the invention that several namespaces N may exist for one wind farm which may be controlled by a user e.g. an administrator by means of the wind farm namespace tool WNT.

Furthermore, the wind farm namespace tool WNT comprises means for defining possible and suitable scaling factors to the elements or data in the namespace N. The wind farm namespace tool WNT may be used by e.g. system administrators to define scaling factors for each wind farm WF the intelligent management server IMS may connect to. The scaling of data in a namespace means that an intelligent management server IMS which communicates with several wind farms may obtain a uniform output from the wind farms. In particular it may be possible to directly compare data from different wind farms. Moreover it is according to an embodiment of the invention possible for the wind farm namespace tool WNT to apply a processing of data related to the namespace. The processing of data may e.g. be a recalculation of a data from Celsius degrees to Fahrenheit degrees or from kilowatt to megawatt. A processing may also involve a pre calculation of data, for example replacement of particular data. The scaling of data according to a namespace may be performed directly on the SCADA server SCS in the wind farm WF or in relation to the intelligent management system IMSY, e.g. on the intelligent management server IMS. The following constitutes an example of the how references of different wind farms may be converted into uniform references.

At a first wind farm WF1 with a type x wind turbine example of reference to the active power production:
Turb1.Generator.ActivePowerProduction (in KWh)

At a second wind farm WF2 with a type y wind turbine example of reference to the active power production:
WTG2.Gen.ActivePower.Prod (in MWh)

After a processing of data according to an embodiment of the invention via a name and scaling the namespace for the intelligent management server IMS the references to may be uniform as shown the following:
T01.Generator.Production.ActivePower (This is in KWh)
T02.Generator.Production.ActivePower (Scaled to KWh)

As shown, the active power data may be accessed in a homogenous manner according to the uniform processed namespace.

The intelligent management server IMS may present a graphical user interface (GUI) on a client to a user comprising a number of elements representing the monitoring data retrieved from one or several wind farms WF. In accordance with an embodiment of the invention, the intelligent management server IMS may provide means for controlling or varying the graphical user interface according to the authorization permissions of a user. This may e.g. be by means of hiding specific controls in the graphical user interface GUI if a user is not authorized to se or change these.

An advantage related to the intelligent management server IMS and the possibility of communicating to several wind farms relies in that, contrary to the prior art systems, integration of data, e.g. measurements originating from different wind farms, may be integrated directly into appropriate databases, thereby avoiding a complex setup of non-homogenous data conversion(s) either between the wind farms and the intelligent management server IMS or at the intelligent management server IMS as such.

Another aspect of this is that the conversion of data may be applied at the wind farms or in close relation thereto.

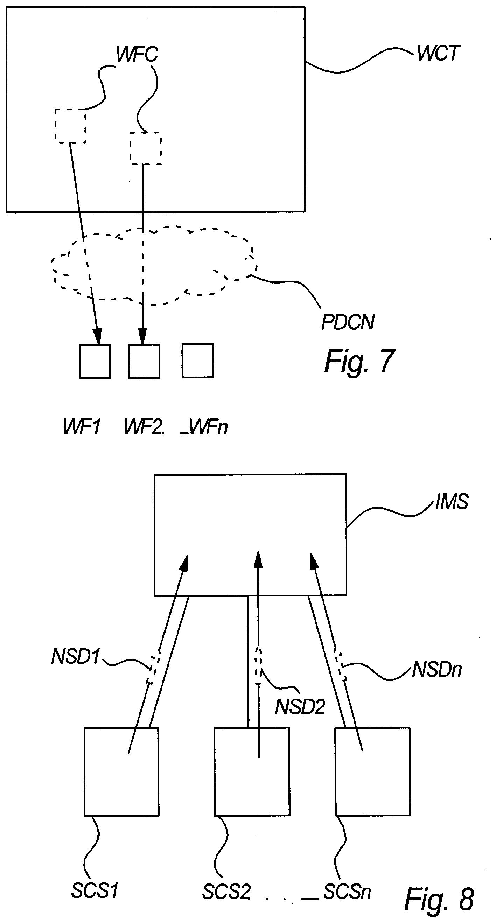

Figure 7 illustrates some principles of a wind farm configuration tool WCT according to an embodiment of the invention.

The wind farm configuration tool WCT is applied for the purpose of establishing connections to wind farms WF1, WF2..WFn.

In the illustrated embodiment, the connections are established via a data communication network such as the Public Data Communication Network PDCN or any other suitable communication means.

Figure 8 illustrates the principles of the namespace definitions transfer between the SCADA servers SCS1, SCS2, ..., SCSn, and the intelligent management server IMS. The namespaces definitions NSD1, NSD2, ..., NSDn are according to an embodiment of the invention stored in relation to the SCADA servers SCS1, SCS2, ..., SCSn in the wind farm or at least a representation thereof may be transmitted to the intelligent management server IMS. The transmission of the namespace definitions NSD1, NSD2, ..., NSDn may be performed when a intelligent management server IMS connects to a wind farm. Alternatively, the transmission of namespace definitions NSD1, NSD2, ..., NSDn may be done continuously for example an updated namespace definition may be transmitted to the intelligent management server IMS once every hour. In another embodiment of the present invention, the namespace definitions NSD1, NSD2, ..., NSDn may be stored with no physical relation to the SCADA servers SCS1, SCS2, ..., SCSn or the wind farms WF. However, it should be noted that the namespace definitions NSD1, NSD2, ..., NSDn may represent the data structure in accordance with a specific wind farm WF.

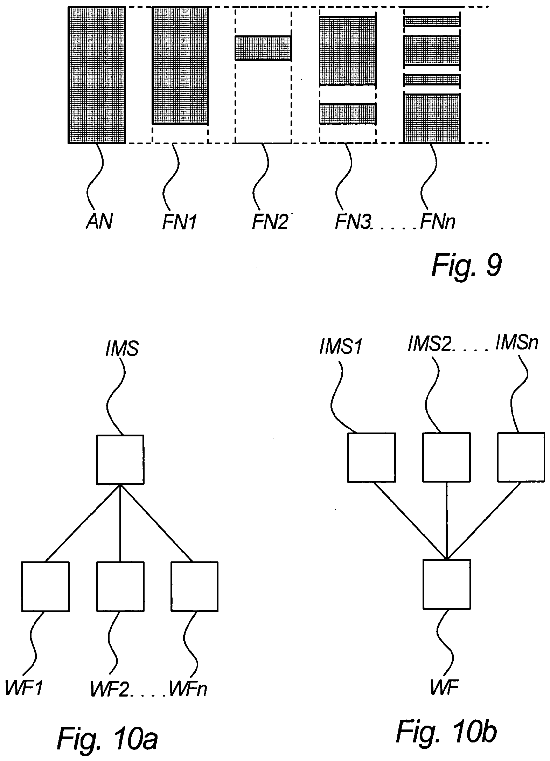

Figure 9 illustrates the principles of how a namespace N may be applied as one aggregate namespace or as a fragmented namespace according to an embodiment of the invention. The figure illustrates an aggregate namespace AN and a number of fragmented namespaces FN1, FN2, FN3...FNn. The aggregate namespace AN represents an example of a full available namespace N according to a wind farm WF. This means that the aggregate namespace AN represents all possible logical elements and sub-elements of a wind farm that a user client may connect to. However, it is possible for system administrators by means of the wind farm namespace tool WNT to set up a special configurations, i.e. configure which fragments should be included in the fragmented namespace for each user independently.

The figure illustrates different examples of fragmented namespaces FN1, FN2, FN3...FNn according to an embodiment of the invention. These examples show that different fragments of namespaces may be provided. For example, a fragmented namespace FN2 may only include one small fragment which illustrates that the user allocated to that fragmented namespace may only access a very limited part of the full aggregate namespace AN.

The method of controlling the authentication and/or authorization properties may thus be by means of allocating different fragments of the aggregate namespace, i.e. a fragmented namespace FN, to different users dependent on their respective authorization properties. The allocation of different aggregate and/or fragmented namespaces to different users may be done by means of an authentication of a user performed on the respective wind farm, e.g. in relation to a SCADA server SCS. The fragmentation of an aggregate namespace AN into a fragmented namespace FN may be performed in relation to the wind farm WF, or alternatively in the intelligent management server dependent on the current user and the authorization properties.

According to a further embodiment of the invention, each fragmented namespace FN1, FN2, FN3...FNn may be dedicated to the communication between a specific wind farm and the intelligent management server(s). In other words, a fragmented namespace FN1 may, with reference to fig. 6, e.g. refer to the communication between the intelligent management server system IMSY and the wind farm WF1, the fragmented namespace FN2 may refer to the communication between the intelligent management server system IMSY and the wind farm WF2 and so forth.

Fig. 10A and fig. 10B illustrate a further feature of the application of fragmented namespaces according to some embodiments of the invention.

In the embodiment of fig. 10A, a number of wind farms WF1, WF2,..,WFn, i.e. two or more, may be associated to an intelligent management server IMS monitoring and/or controlling the wind farms WF1, WF2,..,WFn by means of communication on the basis of fragmented namespaces FN. These fragmented namespaces FN may be different for each wind farm WF1, WF2,..,WFn and may thereby provide different authorization properties to the intelligent management server IMS. The fragmented namespaces may advantageously comprise restricted versions of an aggregate namespace AN as explained in connection with the above explained fig. 9.

In another embodiment of the invention, the connection of the intelligent management server to the wind farms WF1, WF2,..,WFn may be established on the basis of aggregate namespaces or a combination of aggregate namespaces AN and fragmented namespaces FN.

The embodiment of fig. 10B illustrates several intelligent management servers IMS1, IMS2,..., IMSn which may be associated to a wind farm WF.

The number of intelligent management servers IMS1, IMS2,..., IMSn may be two or more.

One of the intelligent management servers IMS1, IMS2,..., IMSn may e.g. comprise an administrator having administrator rights. These rights may e.g. facilitate communication between the associated wind farm(s) and the intelligent management server on the basis of an unrestricted namespace, i.e. an aggregate namespace. This may e.g. imply, that an administrator - e.g. intelligent management server IMS1 - such as a manufacturer of wind turbines of the wind farm, may have complete access for purposes of control, maintenance, testing, updating of software, etc. while a user - e.g. an operator - of the wind farm, e.g. by means of the intelligent management server IMS2 may only communicate with the wind farm WF on the basis of a restricted namespace.

As explained above, such fragmentation and dedication of fragmented namespaces in relation to the communication between the individual wind farm(s) and the intelligent management server(s) may be established and defined by a combined wind farm configuration tool WCT and namespace tool WNT at an administrator site, e.g. in an intelligent management server system IMSY as explained in connection with fig. 6. Evidently, these tools may also be separated and distributed if so desired.

It should be noted that the above-mentioned two embodiments may also be combined in the sense that several intelligent management servers IMS may be cross-connected to several wind farms. As an example, wind farm WF1 of fig. 10a may be associated to more than one intelligent management server IMS, e.g. as explained in connection with fig. 10b.

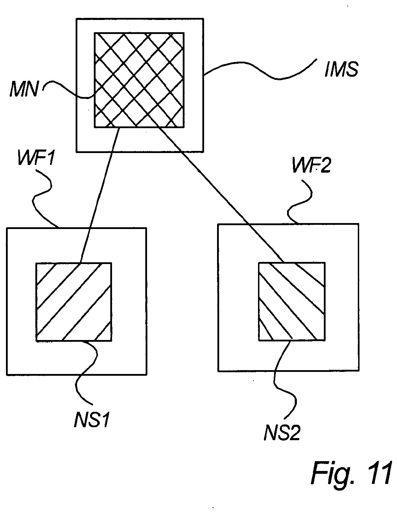

Figure 11 illustrates the advantageous principle of how an intelligent management server IMS may merge two or more different namespaces into one single merged namespace MN.

The figure illustrates an intelligent management server IMS, two wind farms WF1, WF2, two namespaces NS1, NS2 and a merged namespace MN. A client or an IMS connectable to different wind farms WF1, WF2 may be provided with completely different namespaces N due to possible differences between the wind farms WF1, WF2. This may in accordance with the known prior art involve a problem in that the data of the wind farms WF1, WF2 may be represented differently and may furthermore be dependent on different dedicated clients C. This figure illustrates that the intelligent management server IMS is capable of merging two different namespaces NS1, NS2 into one single merged namespace MN. This will evidently entail an easy and uniform overview of data from all connected wind farms, but may also involve that the user, e.g. an operator may control several wind farms in a homogenous manner and even simultaneously. An example of a making the data of wind farms uniform according to a merged namespace is illustrated in the following: The gear oil temperature of a wind turbine in a first wind farm may be metered by reading the following attribute:
turbine1.gear.oiltemp
The gear oil temperature of a wind turbine in a second wind farm may be metered by reading the following attribute: turbine 1 .gear.oiltemp
The gear oil temperature of wind turbine 1 may be referenced in the merged namespace MN: WF1.turbine1.gear.oiltemp
The gear oil temperature of wind turbine 1 may be referenced in the merged namespace MN: WF2.turbine1.gear.oiltemp

This way the intelligent management server IMS may differentiate between the two different attributes by inserting the wind farm name into the reference. Note however, that the above example not is understood limiting and is only constituting an example of making data homogenous.

It should be mentioned that the two namespaces NS1, NS2 illustrated in this figure may be either aggregate or fragmented.

Thus, a very advantageous invention in accordance with the present invention is the merged or joint namespace which makes it possible to connect to different wind farms having different namespaces in uniform and homogenous manner.

## Claims

1. Method of monitoring and controlling a wind farm (WF) comprising the steps of
- establishing wind farm connections (WFC) from an intelligent management server (IMS) to at least one wind farm (WF) on the basis of definitions established by means of a wind farm configuration tool (WCT),
- obtaining a namespace from said at least one wind farm (WF), wherein said namespace of said at least one wind farm defines logical elements of the at least one wind farm (WF) for which data may be exchanged between the at least one wind farm (WF) and the intelligent management server (IMS wherein said namespace (N) is restricted according to user specific authentication and/or authorization properties,
- obtaining measure or monitoring data on said intelligent management server (IMS) from said at least one wind farm (WF), by use of said namespace (N).

2. Method of monitoring and controlling a wind farm (WF) according to claim 1, wherein said wind farm connections (WFC) define specified wind farm(s) and specified intelligent management server(s) (IMS) between which connections are made.

3. Method of monitoring and controlling a wind farm (WF) according to any of the claims 1 or 2, wherein said method further comprises the step of dedicating a namespace (N) to said connection by means of a wind farm namespace tool (WNT).

## Patentansprüche

1. Verfahren zum Überwachen und Steuern eines Windparks (WF), umfassend die Schritte
- Einrichten von Windparkverbindungen (WFC) von einem intelligenten Managementserver (IMS) zu zumindest einem Windpark (WF) auf der Grundlage von Definitionen, die mittels eines Windpark-Konfigurationswerkzeugs (WCT) eingerichtet wurden,
- Erhalten eines Namensraums von dem zumindest einen Windpark (WF), wobei der Namensraum des zumindest einen Windparks logische Elemente des zumindest einen Windparks (WF) definiert, für die Daten zwischen dem zumindest einen Windpark (WF) und dem intelligenten Managementserver (IMS) ausgetauscht werden können, wobei der Namensraum (N) gemäß benutzerspezifischen Authentifizierungs- und/oder Autorisierungseigenschaften eingeschränkt ist,
- Erhalten von Mess- oder Überwachungsdaten auf dem intelligenten Managementserver (IMS) von dem zumindest einen Windpark (WF) durch Verwendung des Namensraums (N).

2. Verfahren zum Überwachen und Steuern eines Windparks (WF) nach Anspruch 1, wobei die Windparkverbindungen (WFC) einen oder mehrere spezifizierte Windparks und einen oder mehrere spezifizierte intelligente Managementserver (IMS) definieren, zwischen denen Verbindungen hergestellt werden.

3. Verfahren zum Überwachen und Steuern eines Windparks (WF) nach einem der Ansprüche 1 oder 2, wobei das Verfahren weiter den Schritt eines Dedizierens eines Namensraumes (N) zu der Verbindung mittels eines Windpark-Namensraumwerkzeugs (WNT) umfasst.

## Revendications

1. Procédé de surveillance et de contrôle d'un parc éolien, WF (Wind Farm), comprenant les étapes de
- établissement de connexions de parc éolien, WFC (Wind Farm Connections), d'un serveur d'administration intelligent, IMS (Intelligent Management Server), à au moins un parc éolien (WF) selon des définitions établies au moyen d'un outil de configuration de parc éolien, WCT (Wind farm Configuration Tool),
- obtention d'un espace de noms dudit au moins un parc éolien (WF), dans lequel ledit espace de noms dudit au moins un parc éolien définit des éléments logiques de l'au moins un parc éolien (WF) pour lesquels des données peuvent être échangées entre l'au moins un parc éolien (WF) et le serveur d'administration intelligent (IMS), dans lequel ledit espace de noms (N) est restreint selon des propriétés d'authentification et/ou d'autorisation spécifique d'un utilisateur.
- obtention de données de mesure ou de surveillance sur ledit serveur d'administration intelligent (IMS) à partir dudit au moins un parc éolien (WF), en utilisant ledit espace de noms (N).

2. Procédé de surveillance et de contrôle d'un parc éolien (WF) selon la revendication 1, dans lequel lesdites connexions de parc éolien (WFC) définissent un ou des parcs éoliens spécifiés et un ou des serveurs d'administration intelligents (IMS) spécifiés entre lesquels des connexions sont établies.

3. Procédé de surveillance et de contrôle d'un parc éolien (WF) selon l'une quelconque de la revendication 1 ou 2, dans lequel ledit procédé comprend en outre l'étape d'allocation d'un espace de noms (N) à ladite connexion au moyen d'un outil d'espace de noms de parc éolien (WNT).
